# EUROPÄISCHE PATENTSCHRIFT

(11) **EP 2 501 510 B1**
(45) Veröffentlichungstag und Bekanntmachung des Hinweises auf die Patenterteilung: **01.06.2016**
(21) Anmeldenummer: 10814721.6
(22) Anmeldetag: 17.11.2010
(51) Int. Cl.: B23B 31/40

(54) **SPANNBACKE**
CLAMPING JAW
MÂCHOIRE DE SERRAGE

(30) Priorität: 17.11.2009 DE 102009053437
(43) Veröffentlichungstag der Anmeldung: 26.09.2012
(73) Patentinhaber: Weidner, Andreas, 72514 Inzigkofen-Vilsingen (DE)
(72) Erfinder: Weidner, Andreas, 72514 Inzigkofen-Vilsingen (DE)
(74) Vertreter: Patentanwälte und Rechtsanwalt Weiß, Arat & Partner mbB
(86) Internationale Anmeldenummer: PCT/EP2010/006998
(87) Internationale Veröffentlichungsnummer: WO 2011/060924

(56) Entgegenhaltungen:
- EP-A1- 0 104 286
- EP-A2- 0 628 378
- JP-A- 57 163 003
- US-A- 4 201 326
- US-A1- 2008 018 062
- US-B1- 6 386 421

## Beschreibung

### Gebiet der Erfindung

Die Anmeldung betrifft eine Spannbacke, eine Haltevorrichtung, und ein Trennverfahren für Ringe.

### Stand der Technik

Aus dem Stand der Technik ist es bekannt, Ringe in einer vertikalen Lage, d.h. die Längsachse des Rings ist horizontal ausgerichtet, zu trennen. Dabei werden die Ringe in ein Spannfutter eingespannt, zusätzlich abgestützt und entlang einer um den Ring umlaufenden Trennstelle getrennt.

Nachteilig an der beschriebenen Vorgehensweise aus dem Stand der Technik ist, dass mit einer horizontalen Ausrichtung der Achse des Rings die maximalen Abmessungen für einen durchtrennbaren Ring begrenzt sind, da bei größeren Abmessungen des Rings bei einer vertikalen Ausrichtung Verformungen auf Grund von Eigengewicht eine größere Rolle spielen. Auch ist es schwierig Ringe mit mehreren Metern Durchmesser aufrecht stehend zu fixieren und zu drehen.

In diesem Zusammenhang wird auf die US 4 201 326 A hingewiesen. Dort ist eine Spannbacke zum Festlegen eines Rings gemäß dem Oberbegriff des Anspruchs 1 beschrieben.

### Offenbarung der Erfindung

Es ist Aufgabe der Erfindung, den oben beschriebenen Stand der Technik zu verbessern, insbesondere ist es Aufgabe der Erfindung, Vorrichtungen und Verfahren anzugeben, mit denen Ringe in einer im Wesentlichen horizontalen, d.h. mit einer im Wesentlichen senkrechten Längsachse getrennt werden können, wobei insbesondere die Halterung des Rings für eine saubere Trennung des Rings und für ein reibungsloses Abnehmen des abgetrennten Teils des Rings geeignet sein soll.

Die Aufgabe wird mit einer Spannbacke nach dem Anspruch 1 gelöst. Dabei bedeutet "im Wesentlichen horizontal", dass der Ring mit seiner Längsachse vorzugsweise vertikal ausgerichtet ist, bevorzugt in einem Bereich mit maximal 20°, bevorzugter maximal 10° Abweichung gegenüber der Vertikalen. Die Ringauflage ist vorzugsweise ein Block, welcher vorteilhafterweise abgerundet ausgestaltet ist, um einer Ring-Innenseiten-Form wenigstens teilweise zu entsprechen. Die zweite Ringauflage bietet den Vorteil, dass mit einer einzelnen Spannbacke, sowohl der Ring selbst als auch ein eventuell von dem Ring abgetrennter Teil gehalten werden können. Durch das Anlegen der Ringauflagen von innen an den Ring ist es möglich, von außen den Ring zu bearbeiten, um ihn zu trennen. Es sollte angemerkt werden, dass bei typischen Ausführungsformen der Erfindung die Spannbacke an einer Haltevorrichtung angeordnet ist, die eine vertikale und eine horizontale Ausrichtung eines Rings ermöglicht. Durch die vertikale Anordnung kann je nach Umgebung Platz eingespart werden, wobei die vertikale Anordnung auch zum An- oder Abtransport des Ringes genutzt werden kann.

Verfahrensmäßig wird bevorzugt, dass die erste und die zweite Ringauflage zunächst an den Ring angelegt werden, wobei bevorzugt entweder die erste oder die zweite Ringauflage an das abzutrennende Teilstück des Rings angelegt wird. Die jeweils andere Ringauflage wird bevorzugt an den Rest-Teilstück, von welchem das abzutrennende Teilstück abgetrennt wird, angelegt. Dies bietet den Vorteil, dass sowohl der Ring als auch der abzutrennende Teil des Rings während des Abtrennens gehalten und stabilisiert werden können. Dadurch wird das Schneiden oder Trennen des Rings mit Werkzeugen von außen wesentlich erleichtert.

Der Antrieb für die zweite Ringauflage, welcher zusammen mit der Spannbacke und der ersten Ringauflage von innen gegen den Ring gedrückt werden kann, ermöglicht es, selektiv auszuwählen, ob in einer ersten ausgefahrenen Position der zweiten Ringauflage beide Ringauflagen von innen an den Ring angelegt werden oder in einer eingefahrenen Position der zweiten Ringauflage lediglich eine. Auf diese Weise ist es möglich, nach Trennen des Rings die erste oder die zweite Ringauflage relativ zu der jeweils anderen Ringauflage zu lockern, um lediglich den abgetrennten Teil des Rings zu haltern. Auf diese Weise kann dann der abgetrennte Teil des Rings zusammen mit einer Haltevorrichtung, an welchem die Spannbacke angeordnet ist, angehoben werden. Bevorzugt wird nach dem Anheben die zweite Ringauflage in eine zweite ausgefahrene Position gebracht, in welcher sie den angehobenen, abgetrennten Teil des Ringes untergreift. Auf diese Weise wird dieser Teil gegen ein Herabfallen zusätzlich gesichert. In der zweiten ausgefahrenen Position ist dabei die zweite Ringauflage weiter ausgefahren als in der ersten ausgefahrene Position. Vorzugsweise ist der Antrieb so angeordnet, dass die zweite Ringauflage bei Ausfall der Energieversorgung in der zweiten ausgefahren Position verbleibt. Auf diese Weise ist der abgetrennte Teil oder auch ein anderer gehaltener Ring zuverlässig gesichert.

Ein weiterer Aspekt der Erfindung betrifft eine Haltevorrichtung für Ringe mit mindestens einer dementsprechenden Spannbacke. Bevorzugte Ausführungsformen von Haltevorrichtungen weisen jeweils mindestens drei Spannbacken in einer der beschriebenen bevorzugten Ausführungsformen auf. Weiterhin umfasst die Haltevorrichtung vorzugsweise eine Spannmechanik, die geeignet ist, die Spannbacke oder die Spannbacken von innen radial gegen den Ring zu drücken. Dies bietet den Vorteil, dass der Ring beim Trennen ausgesteift wird.

Vorzugsweise sind die Spannbacken austauschbar an der Haltvorrichtung montiert. Besonders bevorzugt wird ein Bausatz, der als Austausch für die Spannbacken Auflagebleche umfasst, die unter einen anzuhebenden Ring gefahren werden können. Solche Auflagebleche können L-förmig sein und ermöglichen einen Transport von Ringen ohne dass ein Spannen notwendig ist, da die Ringe von unten gegriffen werden.

Vorteilhafterweise umfasst die Spannmechanik ein auf einer Ebene quer zur Längsachse des Rings schwimmendes Lager. Das schwimmende Lager bietet den Vorteil, dass mit der Spannmechanik die Spannbacken angespannt werden können, ohne dass es zu einer Verspannung mit einer Halterung oder einem Haltepfosten der Spannmechanik kommt.

Vorzugsweise umfasst die Spannmechanik einen Arm zur Aufnahme der Spannbacke, oder bei mehreren Spannbacken jeweils einen Arm zur Aufnahme jeweils einer Spannbacke, wobei der Arm an einem axial verstellbaren Gleitlager angelenkt ist. Bei bevorzugten Ausführungsformen mit mehreren Spannbacken sind die Arme bevorzugt an einem einzigen axial verstellbaren Gleitlager angelenkt. Es ist jedoch auch möglich, einzelne verstellbare Gleitlager für jeden Arm vorzusehen, falls vorteilhafterweise jeder Arm mit jeder Spannbacke einzeln bewegt werden soll. Das axial verstellbare Gleitlager bietet den Vorteil, dass auf einfache Weise eine Verstellung der Spannbacken und ein Anspannen der Spannbacken von innen gegen den Ring möglich ist.

Vorzugsweise ist ein Stab zwischen dem Arm und dem schwimmenden Lager vorgesehen, wobei dieser Stab vorteilhafterweise als Pendelstab ausgebildet ist. Dies bietet den Vorteil eines einfachen Aufbaus, der außerdem stabil ist, um den Ring zu halten. Vorteilhafterweise ist das axial verstellbare Gleitlager mit einer Verstellbremse versehen, sodass nach einem Anspannen der Spannmechanik keine weitere Energie benötigt wird, um die Haltevorrichtung in einer Spannungsposition zu belassen, in welcher der Ring gehalten wird. Dies bietet den Vorteil, dass die Haltevorrichtung zumindest während eines Abtrennvorgangs, bei welchem der Ring mit der Spannmechanik gehalten wird, keine oder lediglich eine geringe Energieversorgung benötigt.

Bevorzugte Ausführungsformen der Haltevorrichtung weisen eine Krankupplung zum Anhängen der Haltevorrichtung an einen Kran auf. So ist es möglich, die Haltevorrichtung mit einem Kran zu versetzen, wobei lediglich zum Anspannen der Spannmechanik der Haltevorrichtung eine Energieversorgung benötigt wird, welche größere Mengen Energie bereitzustellen in der Lage ist. Vorteilhafterweise umfasst die Haltevorrichtung daher einen Energieversorgungsanschluss, beispielsweise einen Stecker oder eine Buchse. Weitere vorteilhafte Ausführungsformen der Haltevorrichtung weisen einen Energiespeicher, bevorzugt zum Speichern von Strom oder von Druckluft auf, um die Haltevorrichtung mit Energie zu versorgen, falls die Haltevorrichtung nicht an eine ständige Energieversorgung über den Anschluss angeschlossen ist. Wird die Haltevorrichtung mit einer Krankupplung ausgeführt ist sie vorzugsweise in Form eines Fachwerks ausgeführt. Dies bietet den Vorteil, dass bei geringem Gewicht eine hohe Stabilität erreicht wird. Das Fachwerk ist vorzugsweise polygonförmig, beispielsweise sechseckig oder achteckig, wobei Druckzylinder, Spindelantriebe oder Servomotoren vorgesehen sind, an welchen Spannbacken befestigt sind, um diese Spannbacken von innen gegen den Ring zu drücken. Mit dieser Anordnung ist es möglich, extrem große Ringe, beispielsweise mit einem Durchmesser von mehr als 2 m zu trennen. Als Kran kann ein Hallenkran oder ein ausschließlich für die Haltevorrichtung verwendeter Portalkran eingesetzt werden.

Allgemein wird im Rahmen der Erfindung bevorzugt, dass die Haltevorrichtung geeignet ist, um Ringe mit einem Innendurchmesser von mindestens 1 m, bevorzugt 1,5 m oder 2 m zu haltern. Dies bietet den Vorteil, dass sehr große Ringe auf einfache Weise getrennt werden können.

Bei Aufbau-der Spannmechanik mit einem Arm zur Aufnahme der Spannbacke, wobei der Arm an einem axial verstellbaren Gleitlager angelenkt ist wird bevorzugt, dass ein Spindelantrieb oder ein Hydraulikantrieb für das verstellbare Gleitlager vorgesehen ist. Auf diese Weise wird erreicht, dass mit einem einzigen Antrieb mehrere Arme, welche an dem axial verstellbaren Gleitlager angelenkt sind, gleichzeitig bewegt werden, sodass ein gleichmäßiges Spannen der Spannmechanik möglich ist. Vorzugsweise ist das verstellbare Gleitlager als Gleitbuchse ausgeführt, welche auf einem Haltepfosten oder einem Halterohr angeordnet ist. Innerhalb dieses Haltepfostens oder dieses Halterohrs ist beispielsweise der Spindelantrieb oder der Hydraulikzylinder angeordnet, wobei die Verbindung zu der Gleitbuchse über axiale Langlöcher mit dem Rohr oder dem Pfosten verwirklicht sind. Dies bietet den Vorteil eines besonders stabilen und einfachen Aufbaus.

Vorzugsweise umfasst die Haltevorrichtung ein Stützlager zum Aufstützen der Haltevorrichtung. Das Stützlager kann beispielsweise ein Rohrende eines Halterohrs bzw. eines Haltepfostens sein. Vorteilhafterweise wird verfahrensmäßig das Stützlager in eine vorbereitete Aufnahme eingebracht, bevor die Spannmechanik angespannt wird, um die Spannbacken von innen gegen den Ring zu drücken. Das Stützlager bietet den Vorteil, dass der Ring sehr steif gehalten wird, sodass ein Trennen des Rings erleichtert wird.

Vorzugsweise umfasst die Haltevorrichtung einen verstellbaren Ausleger zum Haltern der Spannmechanik. An dem Ausleger ist vorzugsweise das Rohr befestigt, an welcher die Spannmechanik angeordnet ist. Der Ausleger ist vorzugsweise derart verstellbar, dass die Spannmechanik in zumindest einer Richtung horizontal und/oder vertikal bewegt werden kann. Weiterhin ist der Ausleger vorzugsweise schwenkbar ausgebildet, sodass ein an der Haltevorrichtung gehalterter Ring verschwenkt werden kann. Dies bietet den Vorteil eines sicheren Handlings des Rings. Bei vorteilhaften Ausführungsformen der Erfindung ist die Haltevorrichtung dazu eingerichtet, den Ring horizontal oder vertikal aufzunehmen, wobei eine vertikale Aufnahme unter Umständen eine Platzersparnis ermöglicht.

Vorzugsweise umfasst die Haltevorrichtung einen Drehantrieb zum Drehen der Spannmechanik. So kann bei einem Ausleger das Rohr gegenüber dem Ausleger vorzugsweise um seine eigene Achse gedreht werden. Vorzugsweise ermöglicht das Stützlager ein Drehen des Rohrs. Dies bietet den Vorteil, dass die Spannmechanik bei einem Trennen des Rings zusammen mit dem Ring gedreht werden kann, sodass der Ring an einer Trenneinheit vorbei bewegt wird.

Die erfindungsgemäße Spannbacke weist vorzugsweise einen Antrieb auf, mit welchem die zweite Ringauflage bevorzugt in der Höhe verstellbar ist. Dies ermöglicht wahlweise ein Spannen des abzutrennenden Teils des Rings oder des übrigen Teils des Rings. Vorteilhafterweise umfasst die erste Ringauflage zumindest zwei Teilblöcke, zwischen denen die zweite Ringauflage angeordnet ist. Dies bietet den Vorteil eines besonders kompakten und stabilen Aufbaus.

Vorteilhafterweise ist die zweite Ringauflage an einer Mechanik befestigt, die angeordnet ist, sodass bei einer Betätigung des Antriebs eine gekoppelt radiale und axiale Bewegung der zweiten Ringauflage relativ zu der ersten Ringauflage bewirkt wird. Dabei bedeutet radial und axial jeweils radial und axial zum Zylinderkoordinatensystem des Rings. Vorzugsweise umfasst die Mechanik eine Kulisse, noch bevorzugter eine doppelte Kulisse, welche einen Zapfen aufnimmt, der mit der Abtriebsseite des Antriebs verbunden ist. Auf diese Weise wird die Abtriebsseite des Antriebs, bevorzugt ein Hydraulikzylinder oder ein Spindelantrieb, derart geführt, dass die zweite Ringauflage nicht nur axial sondern auch radial bewegt wird. Auf diese Weise ist es möglich, mit einem einzigen Antrieb sowohl eine Höhenverstellbarkeit als auch eine radiale Verstellbarkeit der zweiten Ringauflage zu ermöglichen. Weitere bevorzugte Ausführungsformen weisen zwei Antriebe, jeweils einen für eine Koordinatenrichtung, auf. Dies bietet den Vorteil einer größeren Flexibilität bei der Steuerung.

Vorzugsweise umfasst die Spannbacke eine lösbar an der Spannbacke befestigte Trenneinrichtung zum Eingreifen in einen Trennspalt des Rings. Vorzugsweise ist die Trenneinrichtung an der zweiten Ringauflage angeordnet. Dies bietet den Vorteil, dass die Trenneinrichtung über den Antrieb relativ zu der Spannbacke verfahren werden kann. Die Trenneinrichtung ist vorzugsweise eine Trennscheibe oder eine Trennrolle, welche in einen Trennspalt des Rings eingebracht werden kann. Auf diese Weise ist es zuverlässig möglich, einen abgetrennten Teil des Rings anzuheben.

Bei vorteilhaften Ausführungsformen der Erfindung ist an der Spannbacke ein Vakuumsauger angeordnet. Ein Vakuumsauger bietet den Vorteil, dass der Ring nicht nur durch Aufbringen von Druck von innen gehalten werden kann, sondern auch eine zusätzliche Fixierung mittels Saugnäpfen oder einer ähnlichen Anordnung, wie beispielsweise eine einseitig offene Vakuumkammer, welche umlaufend abgedichtet ist, möglich ist. Bei typischen Ausführungsformen der Erfindung ist das Rohr, an welchem die Gleithülse angeordnet sein kann, ausfahrbar, bevorzugt am unteren Ende, oder in der Länge verstellbar. Dadurch ergibt sich die Möglichkeit, Höhendifferenzen ausgleichen zu können.

Allgemein wird bevorzugt, dass die Haltevorrichtung einen Exzenter aufweist. Eine mögliche Ausführungsform eines solchen Exzenterausgleichs ist das schwimmende Lager. Es sind jedoch auch andere Möglichkeiten eines Exzenterausgleichs realisierbar, die bewirken, dass geringfügige Unregelmäßigkeiten bei der konzentrischen Anordnung des Rings relativ zu der mittigen Stütze oder dem mittigen Rohr ausgeglichen werden können. Hierzu können auch Dämpfungselemente oder Federelemente angeordnet werden.

### Kurze Beschreibung der Zeichnungen

Nachfolgend wird die Erfindung anhand einiger bevorzugter Ausführungsbeispiele in Zusammenhang mit den beiliegenden Zeichnungen erläutert, wobei die Zeichnungen zeigen:
- Fig. 1: eine erfindungsgemäße Spannbacke in einem ersten Zustand;
- Fig. 2: die erfindungsgemäße Spannbacke der Fig. 1 in einem zweiten Zustand;
- Fig. 3: eine erfindungsgemäße Haltevorrichtung für. Ringe in einer schematischen perspektivischen Ansicht, die drei Spannbacken entsprechend der Figuren 1 und 2 aufweist; und
- Fig. 4.: eine weitere Ausführungsform einer erfindungsgemäßen Haltevorrichtung für Ringe mit Spannbacken entsprechend der bevorzugten Ausführungsform der Figuren 1 und 2.

### Beschreibung bevorzugter Ausführungsbeispiele

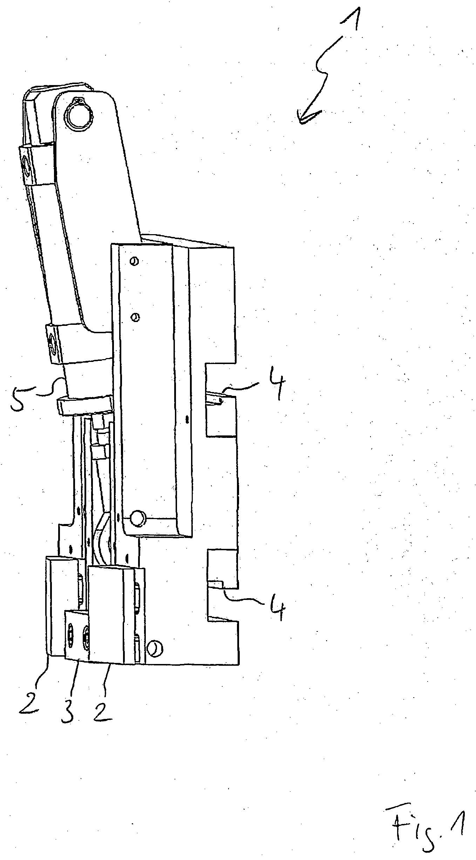

In der Fig. 1 ist schematisch eine erfindungsgemäße Spannbacke 1 dargestellt. Die Spannbacke 1 umfasst eine erste Ringauflage, welche zwei Teilblöcke 2 umfasst. Zwischen den Teilblöcken 2 der ersten Ringauflage ist eine zweite Ringauflage 3 angeordnet.

Die Spannbacke 1 ist dazu geeignet, von innen an eine Oberfläche eines Rings angelegt zu werden. Dabei wird die Spannbacke von im Bild rechts mit einer Druckkraft beaufschlagt, sodass die Spannbacke 1 nach links im Bild gegen einen im Bild 1 nicht dargestellten Ring drückt. Zur Befestigung einer Spannmechanik weist die Spannbacke 1 an der den Ringauflagen abgewandten Seite Befestigungsausnehmungen 4 auf, an denen die Spannbacke 1 an einer Spannmechanik befestigt werden kann.

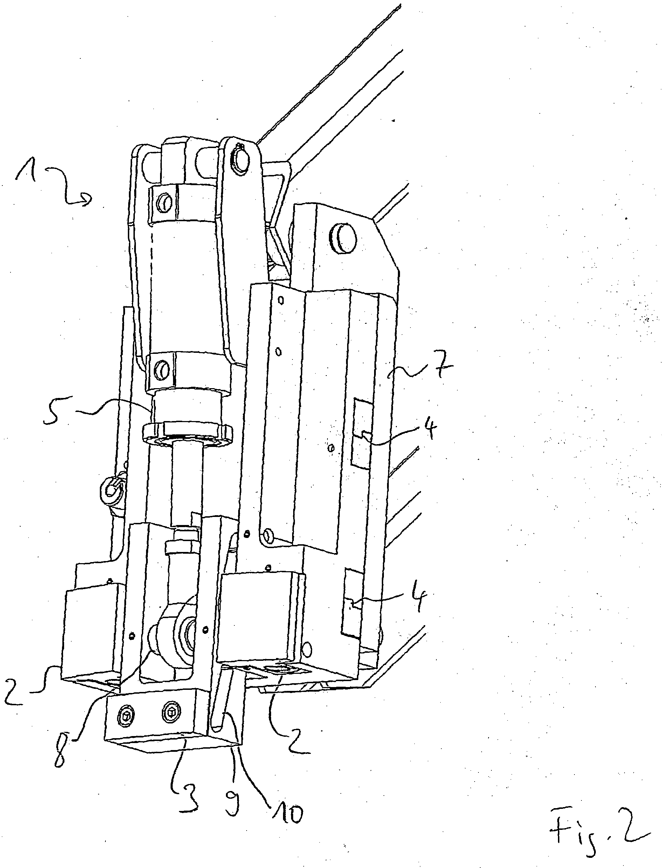

Die zweite Ringauflage 3 ist mit einem Antrieb 5 verbunden, welcher es ermöglicht, die zweite Ringauflage 3 axial und radial in Bezug auf ein Zylinderkoordinatensystem des zu haltenden Rings zu verschieben. Die Bewegungsmöglichkeit der zweiten Ringauflage 3 wird im Zusammenhang mit der Fig. 2 näher erläutert. Der Antrieb 5 umfasst einen Pneumatikzylinder zum Verstellen der zweiten Ringauflage 3.

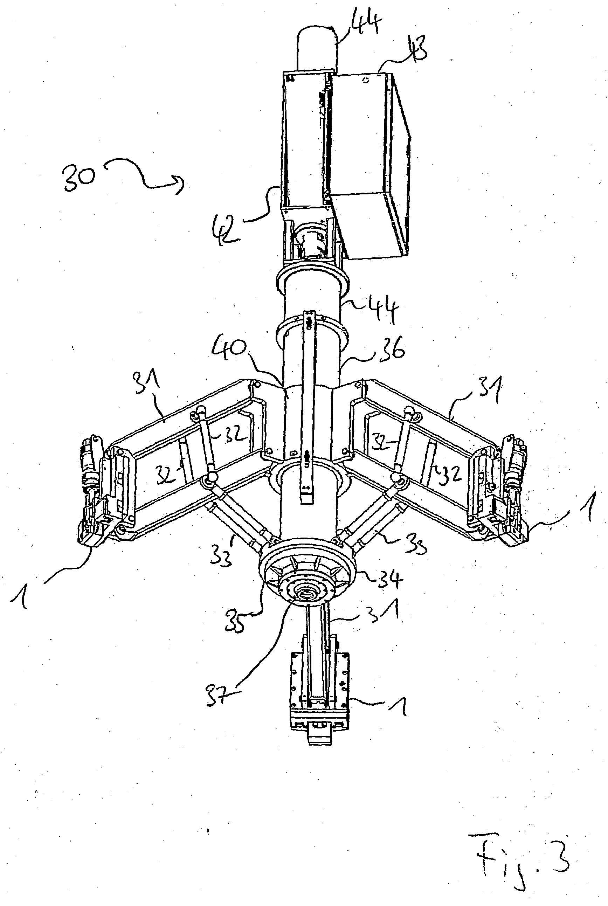

In der Fig. 2 ist die Spannbacke 1 der Fig. 1 in einer weiteren Ansicht dargestellt, wobei in der Fig. 2 außerdem ein Teil einer Spannmechanik dargestellt ist, an welcher die Spannbacke 1 mit einer Halteplatte 7 angebracht ist. Die Halteplatte 7 greift in die Ausnehmungen 4 der Spannbacke 1 ein. Die Teile der Spannmechanik werden nachfolgend mit der Fig. 3 näher erläutert.

In der Fig. 2 ist die zweite Ringauflage 3 in einem ausgefahrenen Zustand gezeigt, d.h. die Spannbacke 1 ist in einem gegenüber der Fig. 1 veränderten Zustand gezeigt. Die zweite Ringauflage 3 wird ausgefahren, indem der Antrieb 5 betätigt wird. Der Antrieb 5 wirkt auf einen Zapfen 8, welcher mit der zweiten Ringauflage 3 über einen Halteblock 9 gelenkig verbunden ist. Der Halteblock 9 weist eine Kulisse 10 auf, welche die Bewegungsrichtung der zweiten Ringauflage 3 bei einem Ausfahren des Antriebs 5 bestimmt. Bei Betätigung des Antriebs 5 wird die zweite Ringauflage dadurch axial nach unten verfahren und radial nach außen verfahren. Dadurch kann erreicht werden, dass mit der ersten Ringauflage, bestehend aus den zwei Teilblöcken 2 und der zweiten Ringauflage 3 verschiedene Teile eines Rings gehalten werden können. So können mit der ersten Ringauflage die abgetrennten Teile eines Rings gehalten werden, die zweite Ringauflage 3 liegt bei diesem ersten ausgefahrenen Zustand dann an dem verbleibenden Teil des Rings an. Dies bietet den Vorteil, dass bei einem Trennen des Rings Schwingungen vermieden werden. Weiterhin ist es möglich, mit der zweiten Ringauflage 3 einen abgetrennten Ring von unten zu sichern, indem die zweite Ringauflage 3 in einen zweiten ausgefahrenen Zustand, bei welchem die Ringauflage 3 weiter ausgefahren ist, als bei dem ersten ausgefahren Zustand. Der Ring befindet sich dann oberhalbe der zweiten Ringauflage 3. Dadurch ist es möglich, den abgetrennten Ring sicher zu transportieren, beispielsweise durch ein Ausschwenken einer Haltevorrichtung. Für ein optimales Ausfahren in den zweiten ausgefahrenen Zustand ist die Kulisse nicht gerade sondern bewirkt bei einem Ausfahren von dem ersten in den zweiten ausgefahrenen Zustand eine stärker radiale Bewegung als bei einem Ausfahren in den ersten ausgefahrenen Zustand.

In den Figuren 1 bis 3 werden gleiche oder ähnliche Teile mit gleichen Bezugszeichen versehen, wobei insbesondere bei der Fig. 3 einige Bezugszeichen der Spannbacken 1 weggelassen werden, um die Übersichtlichkeit zu erhöhen.

In der Fig. 3 ist eine erfindungsgemäße Haltevorrichtung 30 abgebildet, welche drei Spannbacken 1 umfasst. Die Spannbacken 1 sind lediglich mit der Bezugsziffer 1 bezeichnet, wobei die einzelnen Teile der Spannbacken 1 den Figuren 1 und 2 entnommen werden können.

Die Haltevorrichtung 30 umfasst eine Spannmechanik, mit welcher die Spannbacken von innen gegen einen Ring gedrückt werden können. Die Spannmechanik umfasst drei Arme 31, die jeweils eine Parallelführung bilden. Auf diese Weise ist sichergestellt, dass die Spannbacken 1 in jeder Betriebsposition der Spannmechanik in der richtigen vertikalen Ausrichtung sind. Die Parallelführung umfasst Stabilisatorstäbe 32, welche die beiden Pendelstäbe der Parallelführungen der Arme 31 mittig verbinden. An dem unteren Teil der Parallelführung ist jeweils etwa mittig ein doppelter Anlegpendelstab 33 angeordnet, welcher die Arme 31 mit einer Lagerscheibe 34 verbindet. Die Lagerscheibe 34 ist schwimmend auf einer Widerlagerplatte 35 angeordnet. Die Widerlagerplatte 35 ist an einem Stützrohr oder einfach Rohr 36 befestigt, das an seinem unteren Ende ein Stützlager 37 aufweist, mit welchem das Rohr 36 in einem (nicht dargestellten) Widerlager abgestützt werden kann.

Auf dem Rohr 36 ist außerdem eine Gleitbuchse 40 angeordnet, welche mit den Parallelführungen 31 verbunden ist. Durch eine Bewegung der Gleitbuchse 40 können die Spannbacken 1 über die Parallelführungen 31 nach außen oder nach innen verschoben werden.

Die Gleitbuchse 40 ist über Langlöcher in dem Rohr 36 mit einem in dem Rohr 36 angeordneten Spindelantrieb verbunden, welcher durch einen Motor 42 angetrieben werden kann. Weiterhin ist an der Haltevorrichtung noch ein Schaltschrank 43 zur Aufnahme einer Steuerelektronik angeordnet. Die gesamte Haltevorrichtung 30 wird vorzugsweise an einem Ausleger befestigt, wobei die Verbindung zu dem Ausleger über zwei Drehlager hergestellt wird, die an zwei Drehlageraufnahmen 44 der Haltevorrichtung 30 befestigt werden. Auf diese Weise ist es möglich, die gesamte Haltevorrichtung 30 auch um ihre Längsachse des Rohres 36 zu drehen, sodass die Haltevorrichtung 30 zusammen mit einem zu trennenden Ring gedreht werden kann.

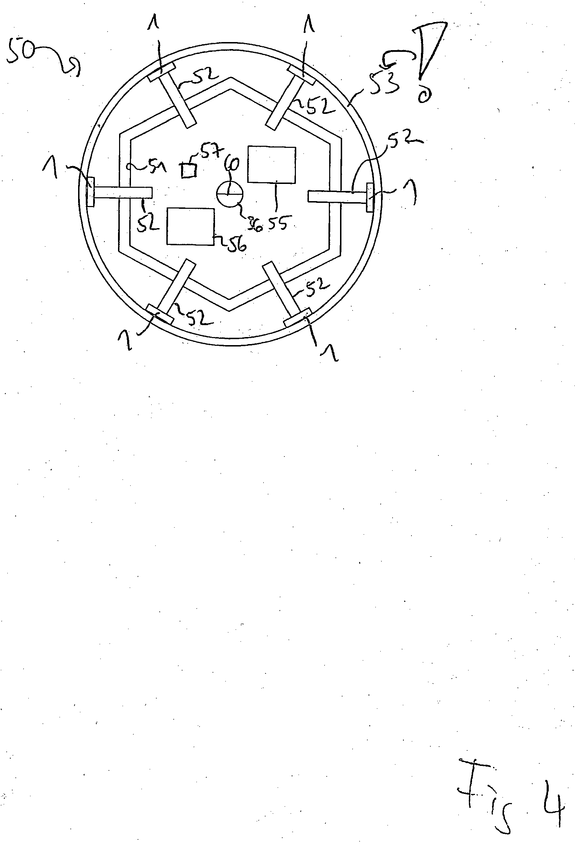

In der Fig. 4 ist eine weitere bevorzugte Ausführungsform einer Haltevorrichtung 50 gezeigt, wobei die Haltevorrichtung 50 über ein sechseckiges Fachwerk 51 verfügt, welches in der Fig. 4 lediglich schematisch von oben dargestellt ist. Das Fachwerk 51 nimmt Druckkräfte auf, welche entstehen, wenn die Spannbacken 1 der Haltevorrichtung 50 von innen gegen einen Ring 52 gedrückt werden. Die Spannbacken 1 sind über Spindelantriebe 52 mit dem Fachwerk 51 verbunden und können so einzeln oder alle gemeinsam von innen gegen den Ring 53 gedrückt werden.

Weiterhin umfasst die Haltevorrichtung 50 eine Steuereinrichtung 55 und einen Energiespeicher 56. Der Energiespeicher 56 dient dazu, die Steuereinrichtung 55 mit Energie zu versorgen, wenn die Haltevorrichtung 50 nicht über den Stecker 57 mit einer externen Energie, hier einer Stromquelle, verbunden ist.

Dies ist insbesondere dann der Fall, wenn die Spannbacken 1 von innen gegen den Ring 53 angelegt sind und der Ring 53 zusammen mit der Haltevorrichtung 50 gedreht wird, um den Ring 53 zu trennen. Durch ein Festlegen der Antriebe 52 kann die Haltevorrichtung 50 während des Trennvorgangs mit sehr wenig Energie auskommen. Lediglich zum Spannen der Spannbacken gegen den Ring 53 wird in nennenswertem Umfang Energie benötigt, diese kann zu diesem Zeitpunkt über den Stecker 57 zugeführt werden. Das Lösen der Steckverbindung an dem Stecker 57 hat dann den Vorteil, dass es nicht zu einem Verdrehen des Kabels, welches an dem Stecker 57 angeschlossen ist, kommt, wenn der Ring 53 durch Drehen des Rings 53 vorbei an einem Trennwerkzeug getrennt wird. Eine mögliche typischerweise eingesetzte Alternative ist eine Übertragung von Energie durch einen Schleifring oder durch ein berührungsloses Übertragungsverfahren, beispielsweise über elektromagnetische Wellen. Demgegenüber weist der Energiespeicher 56 den Vorteil eines einfacheren Aufbaus auf.

Weiterhin weist die Haltevorrichtung 50 wiederum ein mittig angeordnetes Stützrohr oder Rohr 36 auf, das an seinem unteren Ende in ein Stützwiderlager eingebracht werden kann. An dem oberen Ende des Rohrs 36 ist eine Krankupplung 60 angeordnet, im dargestellten Fall eine einfache Strebe, um die Haltevorrichtung 50, gegebenenfalls zusammen mit dem Ring 53 mit einem Kran bewegen zu können. Die Haltevorrichtung 50 eignet sich insbesondere für sehr große Ringe, d.h. Ringe, mit vorzugsweise mehr als 2 m, noch bevorzugter mehr als 3 m Innendurchmesser.

## Patentansprüche

1. Spannbacke (1) für eine Haltevorrichtung (30, 50) für Ringe, insbesondere in einer im wesentlichen horizontalen Ausrichtung, wobei die Spannbacke (1) geeignet ist, von innen an einen Ring (53) angelegt zu werden und umfasst:
- eine erste Ringauflage,
- eine zweite Ringauflage (3) und
- einen Antrieb (5), der angeordnet ist, so dass die Position der zweiten Ringauflage (3) relativ zu der ersten Ringauflage verstellbar ist
**dadurch gekennzeichnet,**
**dass** die zweite Ringauflage (3) an einer Mechanik befestigt ist, die angeordnet ist, so dass bei einer Betätigung des Antriebs eine gekoppelt radiale und axiale Bewegung der zweiten Ringauflage (3) relativ zu der ersten Ringauflage bewirkt wird, wobei.
die Mechanik eine Kulisse (10) umfasst, welche einen Zapfen (8) aufnimmt, der mit der Abtriebsseite des Antriebs (5) verbunden ist, wobei die Abtriebsseite des Antriebs (5) derart geführt ist, dass die zweite Ringauflage (3) nicht nur axial sondern auch radial bewegt wird.

2. Spannbacke (1) nach Anspruch 1, **dadurch gekennzeichnet, dass** die erste Ringauflage zumindest zwei Teilblöcke (2) umfasst, zwischen denen die zweite Ringauflage (3) angeordnet ist.

3. Spannbacke (1) nach einem der Ansprüche 1 oder 2, **gekennzeichnet durch** eine lösbar an der Spannbacke (1) befestigte Trenneinrichtung zum Eingreifen in einen Trennspalt des Rings.

4. Haltevorrichtung (30, 50) für Ringe mit mindestens einer Spannbacke (1) nach einem der Ansprüche 1 bis 3.

5. Haltevorrichtung (30, 50) nach Anspruch 4, **gekennzeichnet durch** eine Spannmechanik, die geeignet ist, die Spannbacke (1) von innen radial gegen den Ring (53) zu drücken.

6. Haltevorrichtung (30, 50) nach Anspruch 4 oder 5, **dadurch gekennzeichnet, dass** die Spannmechanik ein auf einer Ebene quer zur Längsachse des Rings (53) schwimmendes Lager umfasst.

7. Haltevorrichtung (30, 50) nach Anspruch 5 oder 6, **dadurch gekennzeichnet, dass** die Spannmechanik einen Arm zur Aufnahme der Spannbacke (1) umfasst, wobei der Arm an einem axial verstellbaren Gleitlager angelenkt ist.

8. Haltevorrichtung (30, 50) nach einem der Ansprüche 5 bis 7, **gekennzeichnet durch** ein Stützlager (37) zum Aufstützen der Haltevorrichtung (30, 50).

9. Haltevorrichtung (30, 50) nach einem der Ansprüche 5 bis 8, **gekennzeichnet durch** einen mehrachsig verstellbaren Ausleger zum Haltern der Spannmechanik.

10. Haltevorrichtung (30, 50) nach einem der Ansprüche 5 bis 9, **gekennzeichnet durch** eine Krankupplung (60) zum Anhängen der Haltevorrichtung (30, 50) an einen Kran.

11. Haltevorrichtung nach einem der Ansprüche 5 bis 10, **gekennzeichnet durch** einen Drehantrieb zum Drehen der Spannmechanik.

12. Trennverfahren für Ringe (53) unter Verwendung einer Mehrzahl von Spannbacken (1) nach einem der Ansprüche 1 bis 3, mit den Schritten: Anlegen der Spannbacken (1) von innen an den Ring (53), wobei die zweite Ringauflage (3) in eine erste ausgefahrene Position gebracht wird, Trennen des Rings in einen Restring und einen Abtrennring an einer umlaufenden Trennstelle (1), die an den Spannbacken (1) jeweils zwischen der ersten Ringauflage und der zweiten Ringauflage (3) verläuft, Einfahren der zweiten Spannbacke (3) in eine eingefahrene Position, so dass die zweite Ringauflage (3) von dem Restring gelöst ist, Anheben des Abtrennrings mit den ersten Ringauflagen der Spannbacken (1), Ausfahren der zweiten Ringauflagen (3) in eine zweite ausgefahrene Position, so dass die Ringauflagen (3) den Abtrennring untergreifen.

## Claims

1. A clamping jaw (1) for a holding device (30, 50) for rings, in particular in a substantially horizontal orientation, wherein the clamping jaw (1) is suitable for being applied to a ring (53) from the inside, and comprises:
- a first ring support,
- a second ring support (3) and
- a drive means (5) which is arranged so that the position of the second ring support (3) is adjustable relative to the first ring support,
**characterised in that**
the second ring support (3) is fastened to a mechanism which is arranged so that upon actuation of the drive means a simultaneously radial and axial movement of the second ring support (3) relative to the first ring support is brought about, the mechanism comprising a slotted link (10) which receives a pin (8) which is connected to the output side of the drive means (5), the output side of the drive means (5) being guided such that the second ring support (3) is moved not only axially but also radially.

2. A clamping jaw (1) according to Claim 1, **characterised in that** the first ring support comprises at least two partial blocks (2) between which the second ring support (3) is arranged.

3. A clamping jaw (1) according to one of Claims 1 or 2, **characterised by** a severing means fastened detachably to the clamping jaw (1) for engaging in a severing gap of the ring.

4. A holding device (30, 50) for rings, with at least one clamping jaw (1) according to one of Claims 1 to 3.

5. A holding device (30, 50) according to Claim 4, **characterised by** a clamping mechanism which is suitable for pressing the clamping jaw (1) radially against the ring (53) from the inside.

6. A holding device (30, 50) according to Claim 4 or 5, **characterised in that** the clamping mechanism comprises a bearing floating on a plane transversely to the longitudinal axis of the ring (53).

7. A holding device (30, 50) according to Claim 5 or 6, **characterised in that** the clamping mechanism comprises an arm for receiving the clamping jaw (1), the arm being articulated on an axially adjustable plain bearing.

8. A holding device (30, 50) according to one of Claims 5 to 7, **characterised by** a supporting bearing (37) for supporting the holding device (30, 50).

9. A holding device (30, 50) according to one of Claims 5 to 8, **characterised by** a multi-axially adjustable extension arm for holding the clamping mechanism.

10. A holding device (30, 50) according to one of Claims 5 to 9, **characterised by** a crane coupling (60) for attaching the holding device (30, 50) to a crane.

11. A holding device according to one of Claims 5 to 10, **characterised by** a rotary drive for turning the clamping mechanism.

12. A severing method for rings (53) using a plurality of clamping jaws (1) according to one of Claims 1 to 3, having the steps:
applying the clamping jaws (1) to the ring (53) from the inside, the second ring support (3) being brought into a first extended position; severing the ring into a residual ring and a severing ring at a circumambient severing point (1) which extends on the clamping jaws (1) in each case between the first ring support and the second ring support (3);
retracting the second clamping jaw (3) into a retracted position, so that the second ring support (3) is detached from the residual ring; raising the severing ring with the first ring supports of the clamping jaws (1); and extending the second ring supports (3) into a second extended position, so that the ring supports (3) engage under the severing ring.

## Revendications

1. Mâchoire de serrage (1) pour un dispositif de retenue (30, 50) pour bagues, en particulier selon une orientation sensiblement horizontale, la mâchoire de serrage (1) convenant pour être appliquée de l'intérieur sur une bague (53), et comprend:
- une première bague d'appui,
- une deuxième bague d'appui (3), et
- un entraînement (5) qui est disposé de sorte que la position de la deuxième bague d'appui (3) soit déplaçable par rapport à la première bague d'appui,
**caractérisée par le fait**
**que** la deuxième bague d'appui (3) est fixée à un mécanisme qui est disposé de sorte que soit provoqué, lors d'un actionnement de l'entraînement, un mouvement radial et axial de manière couplée de la deuxième bague d'appui (3) par rapport à la première bague d'appui,
le mécanisme comportant une coulisse (10) recevant une broche (8) qui est connectée au côté de sortie de l'entraînement (5), le côté de sortie de l'entraînement (5) étant guidé de sorte que la deuxième bague d'appui (3) soit déplacée non seulement axialement, mais aussi radialement.

2. Mâchoire de serrage (1) selon la revendication 1, **caractérisée par le fait que** la première bague d'appui comprend au moins deux blocs partiels (2) entre lesquels est disposée la deuxième bague d'appui (3).

3. Mâchoire de serrage (1) selon l'une des revendications 1 ou 2, **caractérisée par** un moyen de séparation, fixé de manière amovible à la mâchoire de serrage (1), destiné à s'engager dans une fente de séparation de la bague.

4. Dispositif de retenue (30, 50) pour bagues avec au moins une mâchoire de serrage (1) selon l'une des revendications 1 à 3.

5. Dispositif de retenue (30, 50) selon la revendication 4, **caractérisé par** un mécanisme de serrage qui convient pour pousser la mâchoire de serrage (1) de l'intérieur radialement contre la bague (53).

6. Dispositif de retenue (30, 50) selon la revendication 4 ou 5, **caractérisé par le fait que** le mécanisme de serrage comporte un palier flottant sur un plan transversal à l'axe longitudinal de la bague (53).

7. Dispositif de retenue (30, 50) selon la revendication 5 ou 6, **caractérisé par le fait que** le mécanisme de serrage comporte un bras destiné à recevoir la mâchoire de serrage (1), le bras étant connecté de manière articulée à un palier coulissant déplaçable axialement.

8. Dispositif de retenue (30, 50) selon l'une des revendications 5 à 7, **caractérisé par** un palier de support (37) destiné à supporter tout le dispositif de retenue (30, 50).

9. Dispositif de retenue (30, 50) selon l'une des revendications 5 à 8, **caractérisé par** une console déplaçable multiaxiale destinée à supporter le mécanisme de serrage.

10. Dispositif de retenue (30, 50) selon l'une des revendications 5 à 9, **caractérisé par** un accouplement de grue (60) destiné à fixer le dispositif de retenue (30, 50) à une grue.

11. Dispositif de retenue selon l'une des revendications 5 à 10, **caractérisé par** un entraînement en rotation destiné à faire tourner le mécanisme de serrage.

12. Procédé de séparation pour bagues (53) à l'aide d'une pluralité de mâchoires de serrage (1) selon l'une des revendications 1 à 3, aux étapes consistant à: appliquer les mâchoires de serrage (1) de l'intérieur sur la bague (53), la deuxième bague d'appui (3) étant amenée dans une première position sortie, séparer la bague en une collerette et une bague de séparation en un point de séparation périphérique (1) qui s'étend, sur les mâchoires de serrage (1), chaque fois entre la première bague de support et la deuxième bague de support (3), rétracter la deuxième mâchoire de serrage (3) en une position rétractée, de sorte que la deuxième bague de support (3) soit dégagée de la collerette, lever la bague de séparation avec la première bague de support de la mâchoire de support (1), faire sortir la deuxième bague de support (3) en une deuxième position sortie, de sorte que les bagues de support (3) viennent en prise par-dessous la bague de séparation.
